# EUROPÄISCHE PATENTANMELDUNG

(11) **EP 1 258 768 A2**
(43) Veröffentlichungstag der Anmeldung: **20.11.2002**
(21) Anmeldenummer: 02100481.7
(22) Anmeldetag: 13.05.2002
(51) Int. Cl.: G02B 21/06

(54) **Vorrichtung zur Beleuchtung eines Betrachtungsfeldes, beispielsweise eines Objektfeldes unter einem Mikroskop, durch zwei Lichtquellen**

(30) Priorität: 16.05.2001 DE 10123785
(71) Anmelder: Leica Microsystems AG, 9435 Heerbrugg (CH)
(72) Erfinder: SANDER, Ulrich, Dr., 9445, Rebstein (CH)
(74) Vertreter: Reichert, Werner F., Dr.

(57) **Zusammenfassung**

Die Erfindung betrifft eine Vorrichtung zur Beleuchtung eines Betrachtungsfeldes (18), beispielsweise eines Objektfeldes (18) unter einem Mikroskop (13), durch zwei Lichtquellen (1, 2). Neuartig an dieser Vorrichtung ist, dass die Strahlengänge (3, 4) der beiden Lichtquellen (1, 2) über eine zusammen-fassende Lichtwellenleiter-Weiche (9), einen gemeinsamen Lichtwellenleiter (10) sowie eine trennende Lichtwellenleiter-Weiche (11) geführt sind, wobei einer der beiden Strahlengänge dem Mikroskop (13) als Hauptlichtquelle, der andere einem Handstück (16) zugeführt ist. Zusätzlich ist wenigstens eine der beiden Lichtquellen (1, 2) als wechselbare Einheit (Beleuchtungswechsler) mit zwei einzelnen Lichtquellen (1a, 1b) ausbildbar.

## Beschreibung

Die Erfindung betrifft eine Vorrichtung zur Beleuchtung eines Betrachtungsfeldes, beispielsweise eines Objektfeldes unter einem Mikroskop durch zwei Lichtquellen.

Das Beleuchten eines Objektfeldes mittels zweier Lichtquellen wird bei verschiedenen Anwendungen zunehmend angewandt, da sich dadurch das Objekt mit unterschiedlichen Lichtwellenspektren, beispielsweise UV und/oder Weißlicht und/oder aus verschiedenen Richtungen beleuchten lässt.

Dieses trifft insbesondere bei Anwendungen in der Dentalmedizin zu, bei der Licht bestimmter Wellenlängen zur Polymerisation von Kunststoffen verwendet wird.

Der Einsatz von Lichtwellenleitern ermöglicht, dass das Licht relativ gebündelt und ohne große Lichtverluste an die zu beleuchtenden Orte herangeführt wird und trotzdem die wärmeerzeugenden Lampen entfernt von dem zu beleuchtenden Objekt positioniert sind.

Ein gemeinsamer Lichtwellenleiter ist als 'mehrarmiger Kabel-Lichtleiter' bekannt (Prospekt von Schott 10030d 11942.5 wo /gw).

Die Spektralfilter dienen dem Fernhalten von schädlichen oder unerwünschten Lichtwellenlängen. Bei verschiedenen bekannten Beleuchtungsvorrichtungen sind solche Filter auswechselbar oder auf einem Träger montiert, sodass sie nach Bedarf vor den Lichtwellenleiter, beziehungsweise vor die Lampe geschwenkt oder geschoben werden können.

Beleuchtungswechsler mit Wechsellampen erlauben das Ersetzen einer ausgebrannten Lampe durch eine Reservelampe, damit es im Falle eines Lampenausfalls zu einer möglichst kurzen Unterbrechungsdauer kommt.

Bekannt ist ein Aufbau gemäss M500 (TM) der Anmelderin im Bereich der Operationsmikroskopie, bei dem an einem Stativ ein Mikroskop und eine gattungsgemäße Beleuchtungsvorrichtung montiert sind, wobei zwischen der Beleuchtungsvorrichtung und dem Mikroskop ein Lichtwellenleiter verläuft. Zwischen der Lampe und dem Lichtwellenleiter ist ein einziger Filter vorgesehen, der schädliche Lichtwellenlängen ausfiltert. Zwei Wechsellampen befinden sich auf einem schwenkbaren Träger, der von außen mittels eines Drehgriffs geschwenkt werden kann, sodass von einer Lampe auf die andere umgeschaltet wird, indem die Lampe vom Lichtwellenleiter weggeschwenkt und die andere davorgeschwenkt wird. Der Filter selbst ist beweglich und ohne Weiteres mit anderen Filtern austauschbar.

Wechselfilterhalterungen sind an sich bekannt und sogar bei Beleuchtungsvorrichtungen gibt es bereits Wechselfilterhalterungen. Ein bekannter Aufbau OPMI (R) VISU 200 der Firma Carl Zeiss in Oberkochen umfasst eine Wechsellampenhalterung auf einer schwenkbaren Basis und eine Wechselfilterhalterung, die eine drehbare Scheibe mit Bohrungen umfasst, in denen die Wechselfilter eingesetzt sind. Die Scheibe ist in einer Ebene senkrecht zum Lichtwellenleiter an einer Achse drehbar am Gehäuse gehalten, sodass durch Verdrehen der Scheibe abwechselnd unterschiedliche Filter vor den Lichtwellenleiter gesetzt werden können. Das Verdrehen wird bewerkstelligt durch ein Getriebe, das unterhalb der schwenkbaren Wechsellampenhalterung hindurchführt und mit einem Drehknopf außerhalb des Gehäuses verbunden ist. Die Basis der Wechsellampenhalterung ist in einer Ebene senkrecht auf die Scheibe mit den Wechselfiltern schwenkbar. Es handelt sich somit sowohl für die Wechsellampenhalterung als auch für die Wechselfilterhalterung um einen völlig getrennten Aufbau, wobei beide Wechsellampenhalterungen voneinander unabhängige Bedienorgane und Getriebe aufweisen.

Als weiterer Stand der Technik werden die folgenden Dokumente zitiert:
- CH 495530A: 1969, Schwenkbare Lampen
- DE 1489516: 1965, Rotativer Lampenwechsler
- US 3136920: 1960, Stromüberwachungsschaltkreis
- US 3136920: 1964, Stromfehlindikator
- US 3269795: 1964, Schwenkbarer Lampenwechsler
- US 3678286,: 1972 Automatischer, elektronischer Lampenwechsler
- US 3832539: 1974, Eine Lampe leuchtet in zwei Strahlengänge
- US 4110820: 1978, Reservelampe elektrisch nicht verbunden
- US 4399358: 1983, Interessante verschiedene Schwenklösungen und Spiegelkonstruktion, betrifft aber ein anderes Gebiet
- US 4402038: 1983, Schwenkvorrichtung in Signallampen, ohne Filter
- US 4673824: 1987, Stromüberwachungsschaltkreis
- US 4751398: 1988, Stromüberwachung, Notbeleuchtung für Gebäude
- US 5023515: 1991, Stromüberwachungsschaltkreis für Lampe nach US 5032962
- US 5032962: 1991, Lampenwechsler für OP-Leuchte mit Hebelmechanismus, um die Ersatzlampe in den OP-Reflektorbrennpunkt zu bringen
- US 5406461: 1995, Frühere Lösung der Anmelderin mit rotierbarem Wechsellampenhalter, aber ohne Filter

Der Erfinder erkannte, dass die bekannten Systeme nachteilig sind in Bezug auf die folgenden Punkte:
a) Vorrichtungen dieser Art benötigen in der Regel zwei getrennte Beleuchtungssysteme, welche unabhängig voneinander geschaltet und gehandhabt werden.
b) Das Handstück der zweiten Lichtquelle ist vom Mikroskop unabhängig, sodass es händisch an die zu polymerisierende Stelle gebracht werden muss. Dies führt zu einer komplizierten manuellen Handhabung der zweiten Lichtquelle und bedarf in der Regel einer Hilfsperson, wenn der Arzt selbst andere Handgriffe erledigen möchte.
c) Durch die unabhängige Schaltbarkeit der einzelnen Lichtquellen wird der Bedienungsaufwand der einzelnen Lichtquellen erhöht.
d) Ein einfacher Wechsel zwischen den beiden Beleuchtungen ist nicht möglich, was dazu führt, dass beispielsweise bei der einen Beleuchtung nur UV-Licht zur Verfügung steht, was eine genaue Positionierung aufgrund der Unsichtbarkeit des UV-Lichts erschwert, resp. unmöglich macht.
e) Bei den bestehenden Beleuchtungsvorrichtungen ist die Geschwindigkeit des Wechsels der Lichtquelle, beispielsweise beim Ausfall einer Lampe, verbesserungswürdig.
f) Die bekannten Beleuchtungsvorrichtungen mit Wechselfiltern beinhalten ein aufwändiges Getriebe für die Wechselfilterhalterung und dadurch ein relativ großes Bauvolumen des gesamten Aufbaus.

Der Erfindung liegt somit primär die Aufgabe zugrunde, eine Vorrichtung zu schaffen, welche die Beleuchtung eines Objektfeldes mittels zweier getrennter Lichtquellen erlaubt, welche gemeinsam angesteuert und/oder gemeinsam gehandhabt werden und die angegebenen Nachteile vermeidet.

Gelöst wird diese primäre Aufgabe durch das Zusammenführen der Strahlengänge der beiden Lichtquellen über eine Lichtwellenleiter-Weiche auf einen gemeinsamen Lichtwellenleiter. Dieser Lichtwellenleiter führt die Strahlengänge auf eine trennende Lichtwellenleiter-Weiche, welche die beiden Beleuchtungs-Strahlengänge aufteilt und getrennt einem Mikroskop als Hauptbeleuchtung, resp. einem Handstück als Beleuchtung zuführt. Diese Vorrichtung ist unabhängig davon anwendbar, ob
i) das Licht unterschiedliche Wellenlängenbereiche abdeckt und/oder
ii) gepulst, resp. zeitlich begrenzt eingesetzt ist und/oder
iii) das Licht über Lichtwellenleiter oder über ein Fresnellinsen-System auf die zusammenfassende Lichtwellenleiter-Weiche geführt ist und/oder
iv) Spektralfilter zwischen den Lichtquellen und dem Lichtwellenleiter dazwischengeschaltet sind und/oder
v) ob die Lichtquellen wechsel-, bzw. austauschbar angeordnet sind, um beispielsweise die UV-Beleuchtung durch das Objektiv des Mikroskops, resp. das Weißlicht als zweite Beleuchtung durch das Handstück zu ermöglichen.

Eine weitere (sekundäre) Aufgabe, die auch unabhängig vom Hauptanspruch einsetzbar ist, ist der Aufbau eines Beleuchtungswechslers welcher die folgenden Eigenschaften hat:
- Die Beleuchtungsvorrichtung soll möglichst integriert und klein gebaut sein;
- die Bedienorgane zum Betätigen der Wechsellampenhalterungen und der Wechselfilterhalterung sollen für die Bediener gut erreichbar sein;
- die Bedienorgane sollen hinsichtlich größerer Robustheit möglichst direkt (unter Vermeidung von Getrieben oder dergleichen) mit den zu bewegenden Teilen der Wechselvorrichtungen verbunden sein.

Gelöst wird diese sekundäre Aufgabe durch eine Wechselvorrichtung (Beleuchtungswechsler), welche in einer ersten Variante folgendermaßen ausgeführt ist:
(1) Wenigstens eine der Lichtquellen ist als wechselbare Einheit mit zwei konzentrisch drehbaren einzelnen Lichtquellen ausgebildet und
(2) die Wechselfilter sind konzentrisch zu den Lichtquellen drehbar angeordnet und
(3) Die Bedienorgane greifen dabei - bevorzugt über Wellen - direkt auf die jeweiligen Halterungen, sodass Getriebe oder dergleichen entfallen, große Robustheit gegeben ist, sowie der Aufbau insgesamt optimal integriert ist.

Diese Wechselvorrichtung (Beleuchtungswechsler) ist in verschiedenen weiteren Varianten ausführbar:
- Eine zweite erfindungsgemäße Variante sieht ebenso zwei konzentrische Wechselhalterungen vor, im Unterschied zur ersten Variante ist jedoch keine Wechsellampenhalterung vorgesehen, sondern die Lampen sind starr montiert. Der Eingang des Lichtwellenleiters ist hingegen auf einem schwenkbaren Wechselhalter montiert. Durch diesen Aufbau wird die Bewegung der Lampen vermieden, bei gleichzeitiger rascher Wechselmöglichkeit.
- Eine dritte erfindungsgemäße Ausführungsvariante ersetzt sowohl die Verschwenkbarkeit der Lampen als auch die Verschwenkbarkeit des Lichtwellenleiters, indem anstelle dessen ein optisches Bauteil, z.B. Spiegel, Prismen, Fresnellinsen-Systeme oder dergleichen in der Art verschwenkbar angeordnet sind, dass deren Verschwenken zu einem Umschalten des Lichtweges von der einen starren Lampe zum Lichtwellenleiter auf die andere starre Lampe zum Lichtwellenleiter führt.
- Eine vierte Ausführungsvariante ist eine Alternative zur Dritten insofern, als dort die optischen Bauteile nicht verschwenkbar, sondern linear verschiebbar angeordnet sind.

Durch den erfindungsgemäßen Einsatz einer Vorrichtung zur Beleuchtung eines Betrachtungsfeldes durch zwei Lichtquellen mit je einem Strahlengang, welche mittels einer zusammenführenden Lichtwellenleiter-Weiche über einen gemeinsamen Lichtwellenleiter und eine trennende Lichtwellenleiter-Weiche einem Mikroskop als Hauptbeleuchtung, resp. einem Handstück als zusätzliche Beleuchtung zugeführt sind, werden die nachstehenden Verbesserungen erreicht:
- Es ist ein gemeinsames integriertes Beleuchtungs-System aufbaubar, dessen Lichtquellen einzeln und/oder gemeinsam angesteuert und geschaltet sind.
- Die beiden Beleuchtungen des Objektfeldes sind in einen gemeinsamen Aufbau beispielsweise am Stativ eines Mikroskops integrierbar, wodurch das praktische Handling vereinfacht ist.
- Die Verwendung eines gemeinsamen Lichtwellenleiters als Verbindung von den Lichtquellen zum Mikroskop, resp. Handstück ermöglicht einen kompakten Aufbau und vor allem ein geringes Gewicht für die Verbindung, so dass der Stativaufbau weniger belastet wird.
- Es sind unterschiedliche Lichtquellen oder Lichtwellenlängen einstellbar, was dem unterschiedlichen Einsatzzweck der beiden Lichtquellen entgegenkommt.
- Das Handstück ist am Mikroskop befestigbar, beispielsweise mittels eines Schwanenhalses. Diese Erfindung ist auch unabhängig vom unabhängigen Hauptanspruch einsetzbar.
- Die Lichtquellen sind bei Bedarf unterschiedlich ansteuerbar, beispielsweise gepulst oder zeitlich begrenzt.
- Es sind bei Bedarf Filter zwischen den Lichtquellen und der zusammenführenden Lichtwellenleiter-Weiche einfügbar.
- Die beiden Hauptlichtquellen sind gemäss einer besonderen Ausgestaltung austauschbar angeordnet, sodass es möglich ist, dem Mikroskop, resp. dem Handstück wahlweise eine der beiden Lichtquellen zuzuordnen, was eine genaue Positionierung, insbesondere des Handstücks vereinfacht.

Im obigen Text wird zwar auf ein Operationsmikroskop Bezug genommen; die Erfindung ist jedoch nicht darauf eingeschränkt, sondern steht vielmehr auch anderen Benutzern optischer Geräte mit zwei unterschiedlichen Beleuchtungen des Objektfeldes offen (z.B. Video- und Photokameras, Entfernungsmessungs- und Fokussier-Einrichtungen, etc.). Die Patentansprüche sind dementsprechend breit auszulegen.

Durch die besondere Weiterentwicklung der Erfindung, bzw. durch den Einsatz eines erfindungsgemäßen Beleuchtungswechslers, bei wenigstens einer der beiden Lichtquellen, werden zusätzlich die folgenden Verbesserungen erreicht:
- Es ist ein sehr schneller Lampenwechsel, beispielsweise bei einem Ausfall einer Lampe möglich.
- Ein Filtersystem mit unterschiedlichen Spektralfiltern ist auf kleinem Raum integrierbar.
- Durch den Wegfall von Getrieben oder dergleichen ist große Robustheit und geringer Verstellwiderstand gegeben.
- Der Aufbau ist insgesamt optimal integriert.
- Varianten mit starr angeordneten Lampen reduzieren bei gleicher Wechselbarkeit mechanische Belastungen (durch Erschütterungen) für die Lampen, dadurch erhöht sich deren Lebensdauer.

Die besondere Weiterentwicklung der Erfindung, nämlich der Beleuchtungswechsler, ist nicht auf die in den Ansprüchen oder in den Zeichnungen angegebenen Ausführungen beschränkt. Sie umfasst alle jene Varianten und Ausbildungen, die dem Fachmann nach Studium dieser Anmeldung und in Kenntnis des Stands der Technik vorstellbar sind. Insbesondere ist im Sinne der Erfindung 'konzentrisch' auch als 'parallel' und 'verschwenken' auch als 'verschieben' zu verstehen. Dies ist dahingehend erklärbar, als für diese Erfindung eine Gerade als Kurve mit unendlichem Radius verstanden wird. In den Ausführungsbeispielen sind jeweils zwei Wechsellampen und drei Wechselfilter dargestellt. Die Erfindung ist jedoch nicht auf eine bestimmte Anzahl von Lampen oder Filter eingeschränkt.

Der vorgehend beschriebene Beleuchtungswechsler ist auch unabhängig vom Gegenstand des unabhängigen Hauptanspruchs einsetzbar.

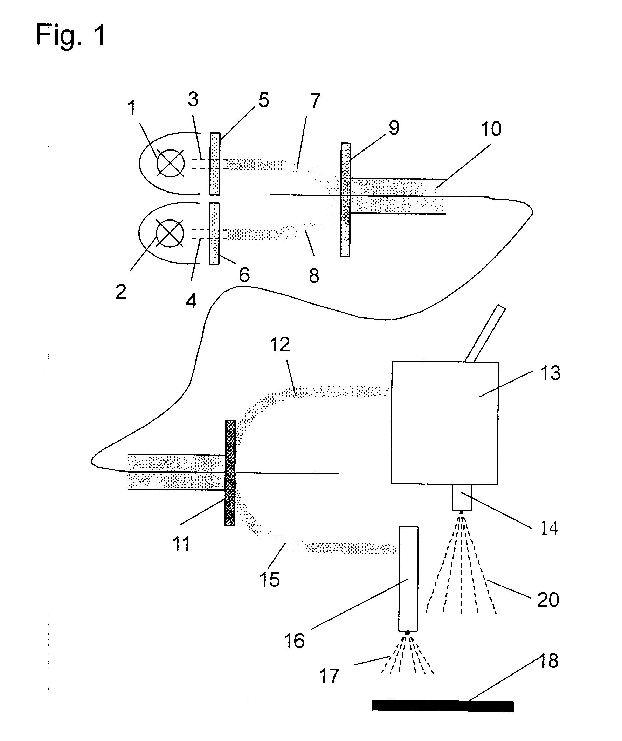

Die Bezugszeichenliste und die Fig.1 bis Fig.6 sind zusammen mit den in den Ansprüchen beschriebenen, beziehungsweise geschützten Gegenständen integrierender Bestandteil der Offenbarung dieser Anmeldung.

Die Figuren werden zusammenhängend und übergreifend beschrieben. Gleiche Bezugszeichen bedeuten gleiche Bauteile, Bezugszeichen mit unterschiedlichen Indizes geben funktionsgleiche Bauteile an.
- Fig.1: Symbolischer Gesamtaufbau einer optischen Beleuchtungseinrichtung mit zwei unterschiedlichen Lichtquellen, beispielsweise für ein Operationsmikroskop;
- Fig.2: Symbolischer Aufbau eines Systems zweier Lichtquellen, welche über ein Fresnellinsen-System auf eine zusammenführende Lichtwellenleiter-Weiche abgebildet werden;
- Fig.3: Befestigung des Handstücks am Mikroskop mittels beispielsweise eines Schwanenhalses;
- Fig.4: Schematische Darstellung des konstruktiven Aufbaus eines Beleuchtungswechslers;
- Fig.5: Schematische Darstellung der schwenkbaren Halteplatten des in Fig.4 dargestellten Beleuchtungswechslers;
- Fig.6: Seitenansicht des in Fig.4 dargestellten Beleuchtungswechslers.

Die Fig.1 zeigt symbolisch den Gesamtaufbau einer erfindungsgemäßen optischen Beleuchtungseinrichtung, mit zwei Lichtquellen 1, 2, in deren Strahlengängen 3, 4 vorgeschaltete Wechselfilter 5, 6, zwei kurzen Strahlengängen, die beispielsweise durch Lichtwellenleiter 7, 8 realisiert sind, einer zusammenführenden Lichtwellenleiter-Weiche 9, welche eine andere Bündelung der Lichtstrahlen bewirkt, einem gemeinsamen Lichtwellenleiter 10, einer trennenden Lichtwellenleiter-Weiche 11, welche eine Trennung der Lichtwellen bewirkt, einem Lichtwellenleiter 12 zur Hauptbeleuchtung für ein Mikroskop 13 mit einem Objektiv 14 und einem Objektiv-Strahlengang 20. Ein weiterer Lichtwellenleiter 15 führt, ausgehend von der trennenden Lichtwellenleiter-Weiche 11, zu einem Handstück 16 und erlaubt einen Strahlengang 17 zu einem Objekt 18.

Der Lichtleiter 10, bevorzugt als einkanaliger Lichtwellenleiter aufgebaut, könnte bei einer Variante jedoch auch als Doppel-Lichtwellenleiter aufgebaut sein.

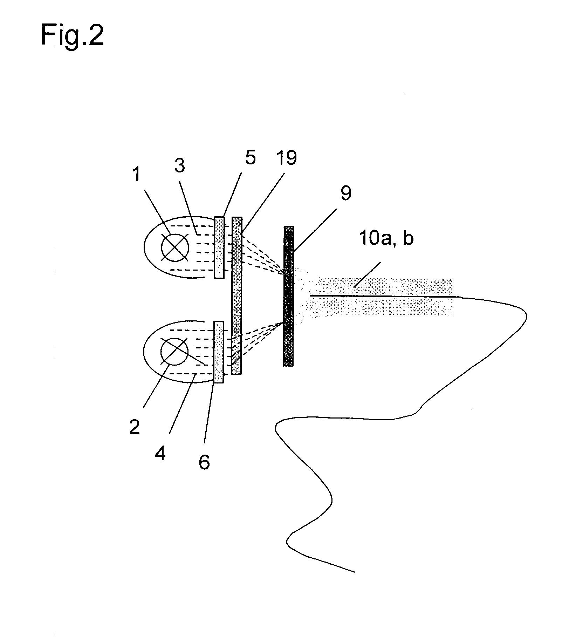

Fig.2 zeigt schematisch zwei Lichtquellen 1, 2, deren jeweiligen Strahlengängen 3, 4 eingeschaltete Wechselfilter 5, 6, ein Fresnellinsen-System 19 und einen Doppel-Lichtwellenleiter 10a, 10b.

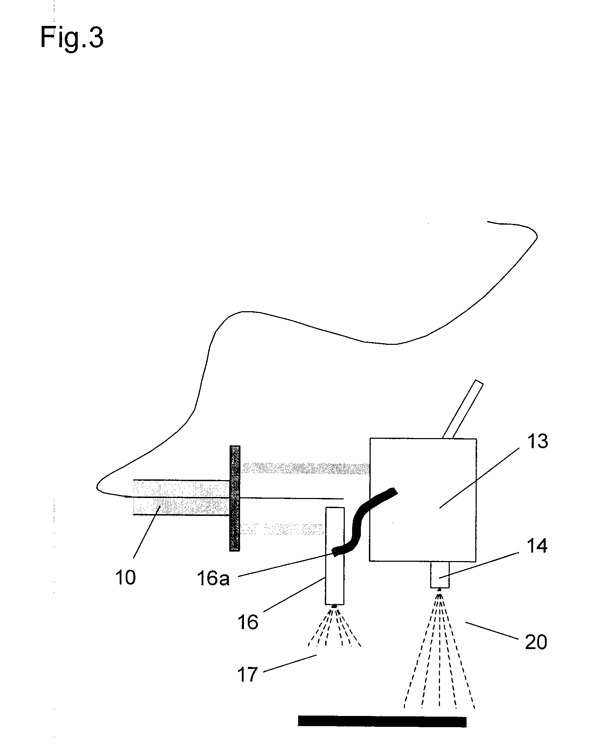

Fig.3 zeigt symbolisch die Befestigung des Handstücks 16 direkt am Mikroskop 13, beispielsweise mittels eines Schwanenhalses 16a.

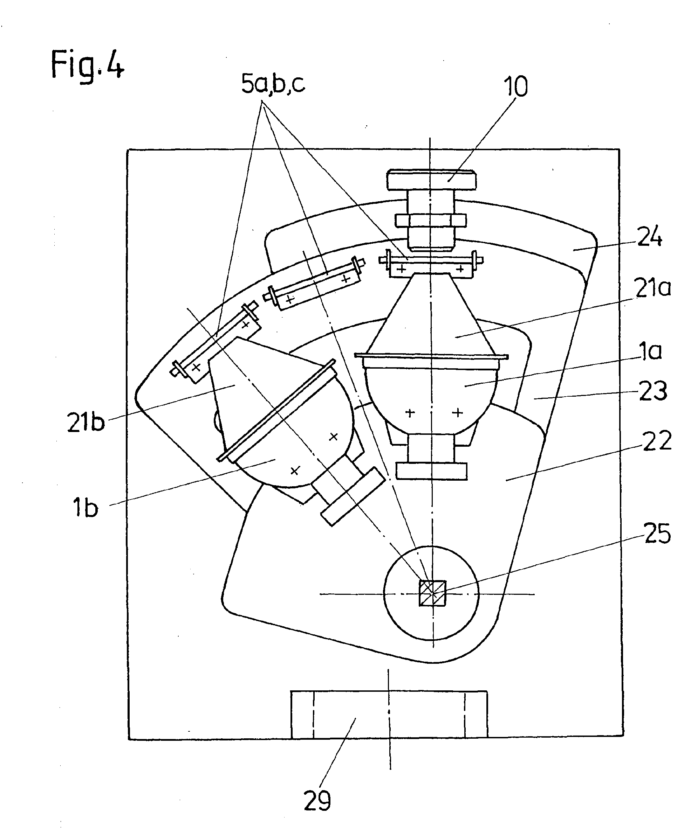

Fig.4 zeigt schematisch den Aufbau eines Beleuchtungswechslers mit zwei Lichtquellen 1a, 1b, einer Optik 21 a, resp. 21b für die Lichtquelle 1a, resp. 1b, einem vorgeschalteten Filtersystem 5a, 5b, 5c, sowie einer um eine Achse 25 drehbaren Halteplatte 22 für die Lichtquellen 1, einer koaxial drehbaren Halteplatte 23 für die Wechselfilter 5, resp. eine als Alternative vorsehbare koaxial drehbare Halteplatte 24 für den Lichtleiter.

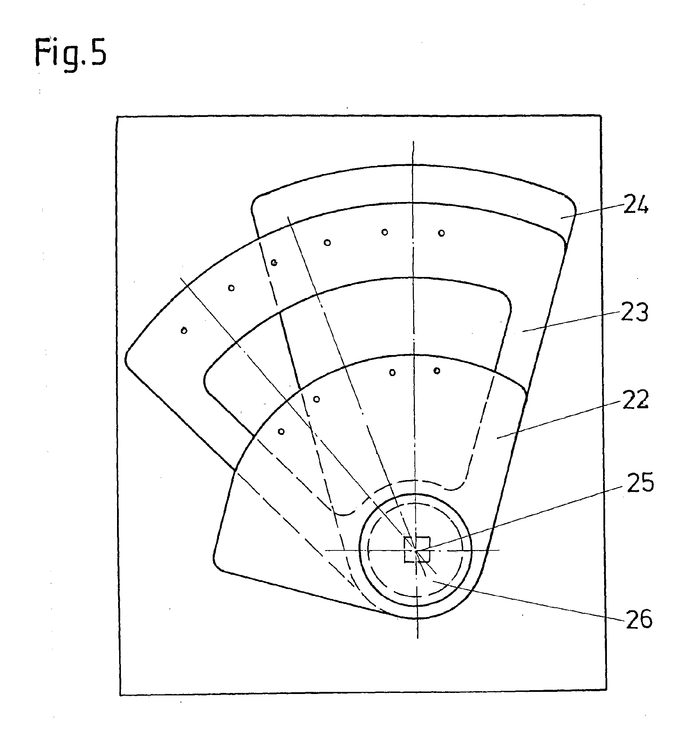

Fig.5 zeigt schematisch den Aufbau für die Bewegung der in Fig.4 dargestellten Halteplatten 22, resp. 23 und 24 für die Beleuchtung 1, resp. das Filtersystem 5 und den Lichtleiter 10. Sie zeigt einen Drehknopf 26 zur Ansteuerung der Halteplatten über eine Achse 25. Der Drehknopf kann -wie an sich bekannt - gehoben oder gesenkt werden, sodass er wahlweise mit einer der Platten 22, 23 oder 24 in Einsatz gebracht werden kann und somit als Multifunktions-Bedienknopf wirkt.

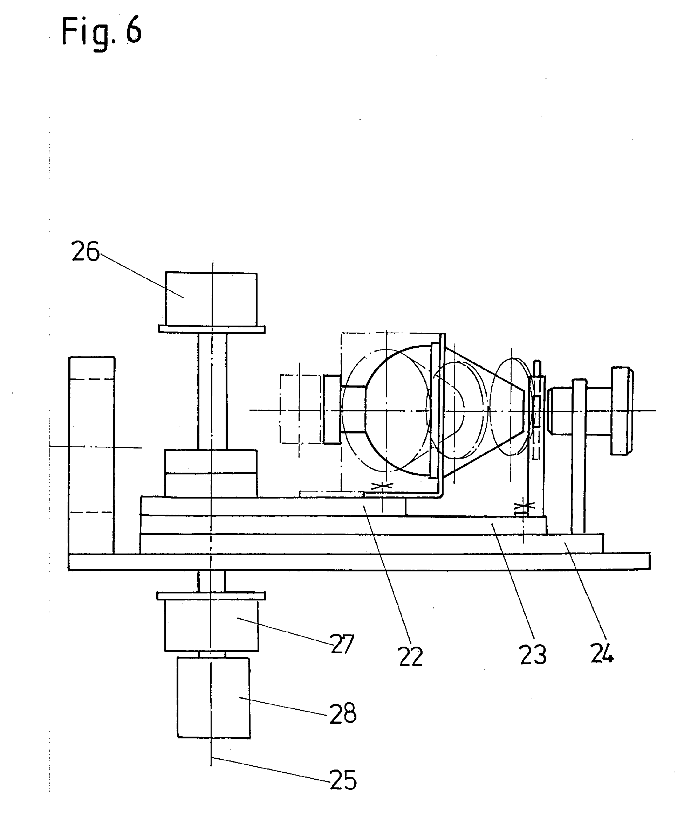

In Fig.6 wird in Seitenansicht der in Fig.4 beziehungsweise in Fig.5 dargestellte Beleuchtungswechsler zusätzlich mit den Drehknöpfen 27, resp. 28 zur Ansteuerung der Halteplatten 23, 24 des Filtersystems 5, resp. des Lichtwellenleiters 10 dargestellt. Bei diesem Aufbau ist für die Lampen 1a, 1b ein Drehknopf 26 vorgesehen, während für die Filter 5a, 5b, 5c ein Drehknopf 28 vorgesehen ist. Der Lichtwellenleiter kann mittels koaxial gelagertem eigenen Drehknopf 28 verschwenkt werden. Bei dieser Variante sind die Drehknöpfe 26, 27 und 28 somit nicht multifunktional.

### Funktionsweise

### (Fig.1 bis Fig.3)

Die von zwei Lichtquellen 1, resp. 2 ausgehende Strahlengänge 3, 4 werden über Lichtwellenleiter 7, 8, oder aber einem Fresnellinsen-System 19 oder dergleichen, einer zusammenführenden Lichtwellenleiter-Weiche zugeführt. Die zusammengeführten Strahlengänge werden über einen gemeinsamen Lichtwellenleiter 10 einer trennenden Lichtwellenleiter-Weiche 11 zugeführt. Der eine Strahlengang 3 wird über einen Lichtwellenleiter 12 der Hauptbeleuchtung eines Mikroskops 13 zugeführt, der andere Strahlengang 4 über einen anderen Lichtwellenleiter 15 einem Handstück 16, welches als zweite Lichtquelle 17 für das Objekt 18 dient.

Das Handstück 16 kann am Mikroskop 13, beispielsweise mittels eines Schwanenhalses 16a, befestigt werden.

Optional können die beiden Lichtquellen 1, 2 schieb- oder wechselbar angeordnet sein und/oder gepulst, resp. zeitlich begrenzt eingesetzt werden. Zusätzlich ist es möglich, Spektralfilter 5, 6 in den jeweiligen Strahlengang 3, 4 der einzelnen Lichtquelle zwischenzuschalten.

### (Fig.4 bis Fig.6)

Zwei Lichtquellen 1a, 1b werden auf einer Halteplatte 22 koaxial drehbar um eine Achse 25 und mittels eines Drehknopfes 26 ansteuerbar angeordnet. Das Filtersystem 5, resp. der Lichtwellenleiter 10 werden analog um die gleiche Drehachse 25 einzeln drehbar angeordnet. Aufgrund dieser Anordnungen sind beliebige Beleuchtungs- und Filterkombinationen durch einflache Drehung der einzelnen Systeme möglich.

### Bezugszeichenliste

- 1: Lichtquelle 1 (a, b)
- 2: Lichtquelle 2
- 3: Strahlengang Lichtquelle 1
- 4: Strahlengang Lichtquelle 2
- 5: Wechselfilter der Lichtquelle 1 (a, b, c)
- 6: Wechselfilter der Lichtquelle 2
- 7: Lichtwellenleiter für Lichtquelle 1
- 8: Lichtwellenleiter für Lichtquelle 2
- 9: Lichtwellenleiter-Weiche (zusammenfassend)
- 10: Lichtwellenleiter 1, resp. 2-fach (a, b)
- 11: Lichtwellenleiter-Weiche (trennend)
- 12: Lichtwellenleiter für Hauptbeleuchtung Mikroskop
- 13: Mikroskop
- 14: Objektiv des Mikroskops
- 15: Lichtwellenleiter für Beleuchtung Handstück
- 16: Handstück 16a Befestigung Handstück (Schwanenhals)
- 17: Strahlengang Handstück
- 18: Objekt
- 19: Fresnellinsen-System
- 20: Objektiv-Strahlengang
- 21: Optik für Lichtquelle 1 (a, b)
- 22: Halteplatte Lichtquelle
- 23: Halteplatte Wechselfilter
- 24: Halteplatte Lichtwellenleiter
- 25: Rotationsachse Halteplatten
- 26: Drehknopf für Halteplatte Hauptbeleuchtung
- 27: Drehknopf für Halteplatte Wechselfilter
- 28: Drehknopf für Halteplatte Lichtleiter
- 29: Halterung für Kühlgebläse

## Patentansprüche

1. Vorrichtung zur Beleuchtung eines Betrachtungsfeldes, beispielsweise eines Objektfeldes (18) unter einem Mikroskop (13) durch zwei Lichtquellen (1, 2) mit je einem Strahlengang (3, 4), **dadurch gekennzeichnet, dass** die Strahlengänge (3, 4) der beiden Lichtquellen (1, 2) über eine zusammenfassende Lichtwellenleiter-Weiche (9), einen gemeinsamen Lichtwellenleiter (10) sowie eine daran anschließende trennende Lichtwellenleiter-Weiche (11) mit zwei Ausgängen geführt sind, wobei einer der beiden Strahlengänge (12) am dem Mikroskop (13) zugeordneten Ausgang als Hauptlichtquelle, der andere Strahlengang (15) einem Handstück (16) zugeführt ist.

2. Vorrichtung nach Anspruch 1, **dadurch gekennzeichnet, dass** die beiden Lichtquellen (1, 2) für unterschiedliche Lichtwellenspektren, beispielsweise UV und/oder Weißlicht und/oder IR, ausgelegt sind.

3. Vorrichtung nach einem der vorhergehenden Ansprüche, **dadurch gekennzeichnet, dass** die Strahlengänge (3, 4) der beiden Lichtquellen über je einen Lichtwellenleiter (7, 8) der zusammenfassenden Lichtwellenleiter-Weiche (9) zugeführt sind.

4. Vorrichtung nach einem der vorhergehenden Ansprüche, **dadurch gekennzeichnet, dass** die Verbindung der zusammenfassenden Lichtwellenleiter-Weiche (9) zur trennenden Lichtwellenleiter-Weiche (11) über zwei getrennte, jedoch zusammengebaute Lichtwellenleiter (10) (Doppel-Lichtwellenleiter) erfolgt.

5. Vorrichtung nach einem der vorhergehenden Ansprüche, **dadurch gekennzeichnet, dass** die Strahlengänge (3, 4) der beiden Lichtquellen (1, 2) über ein Fresnellinsen-System (19) den einzelnen Lichtwellenleitern (10a, 10b) zugeführt sind.

6. Vorrichtung nach einem der vorhergehenden Ansprüche, **dadurch gekennzeichnet, dass** die beiden Lichtquellen (1, 2) wechsel- resp. austauschbar angeordnet sind, beispielsweise auf einer drehbaren Scheibe.

7. Vorrichtung nach einem der vorhergehenden Ansprüche, **dadurch gekennzeichnet, dass** in die, beziehungsweise in den Strahlengängen (3, 4) eines und/oder beider Lichtquellen (1, 2) Spektralfilter (5, 6) einsetzbar beziehungsweise angeordnet sind.

8. Vorrichtung nach einem der vorhergehenden Ansprüche, **dadurch gekennzeichnet, dass** die Spektralfilter (5, 6) zwischen der Lichtquelle (1, 2) und der zusammenfassenden Lichtwellenleiter-Weiche (9) und/oder zwischen der trennenden Lichtwellenleiter-Weiche (11) und dem Mikroskop (13), resp. dem Handstück (16) einsetzbar beziehungsweise angeordnet sind.

9. Vorrichtung nach einem der vorhergehenden Ansprüche, **dadurch gekennzeichnet, dass** die Spektralfilter (5, 6) beispielsweise aus einer der Vorrichtung zugeordneten Gruppe unterschiedlicher Filter auswählbar und austauschbar sind.

10. Vorrichtung nach einem der vorhergehenden Ansprüche, **dadurch gekennzeichnet, dass** der Wechsel der Spektralfilter (5, 6) manuell und/oder elektromechanisch antreibbar ist.

11. Vorrichtung nach einem der vorhergehenden Ansprüche, **dadurch gekennzeichnet, dass** der Wechsel der Spektralfilter (5, 6) manuell und/oder elektronisch, beispielsweise mittels eines, insbesondere parametergesteuerten Beleuchtungs-Rechners, ansteuerbar ist.

12. Vorrichtung nach einem der vorhergehenden Ansprüche, **dadurch gekennzeichnet, dass** die Lichtquellen (1, 2) unabhängig voneinander zuund wegschaltbar sind.

13. Vorrichtung nach einem der vorhergehenden Ansprüche, **dadurch gekennzeichnet, dass** wenigstens eine der Lichtquellen (1, 2) konstant oder insbesondere elektronisch beziehungsweise elektrisch gesteuert zeitlich begrenzt einsetzbar ist.

14. Vorrichtung nach einem der vorhergehenden Ansprüche, **dadurch gekennzeichnet, dass** wenigstens eine der Lichtquellen (1, 2) kontinuierlich oder gepulst einsetzbar ist.

15. Vorrichtung nach einem der vorhergehenden Ansprüche, **dadurch gekennzeichnet, dass** wenigstens eine der Lichtquellen (1, 2) wechselbar, beispielsweise dreh- oder schiebbar, angeordnet ist.

16. Vorrichtung nach einem der vorhergehenden Ansprüche, **dadurch gekennzeichnet, dass** das Handstück (16) über eine Halterung fest mit dem Mikroskop (13) verbindbar ist.

17. Vorrichtung nach einem der vorhergehenden Ansprüche, **dadurch gekennzeichnet, dass** das Handstück (16) als flexibler Schwanenhals (16a) ausgebildet, resp. durch einen Schwanenhals (16a) gehalten ist.

18. Vorrichtung nach einem der vorhergehenden Ansprüche, **dadurch gekennzeichnet, dass** die Lichtquelle 1 (1) beziehungsweise die Lichtquelle 2 (2) als wechselbare Einheit(en) mit zwei Lichtquellen (1a, 1b) ausgebildet ist (sind), vorzugsweise an einem Beleuchtungswechsler-System.

19. Vorrichtung nach einem der vorhergehenden Ansprüche, **dadurch gekennzeichnet, dass** die Lichtquellen (1a, 1b) koaxial drehbar, beispielsweise auf einer um eine Achse (25) drehbaren ersten Halteplatte (22) angeordnet sind.

20. Vorrichtung nach einem der vorhergehenden Ansprüche, **dadurch gekennzeichnet, dass** Wechselfilter (5a, 5b, 5c) koaxial drehbar, beispielsweise auf einer um eine Achse (25) schwenkbaren zweiten Halteplatte (23) angeordnet sind, so dass vor den verschiedenen Lichtquellen (1a, 1b) verschiedene Wechselfilter (5a, 5b, 5c) zu liegen kommen können.

21. Vorrichtung nach einem der vorhergehenden Ansprüche, **dadurch gekennzeichnet, dass** der Eingang des Lichtleiters (10), beispielsweise auf einer um eine Achse (25) schwenkbaren dritten Halteplatte (24) koaxial drehbar, beziehungsweise anordenbar ist.

22. Vorrichtung nach einem der vorhergehenden Ansprüche, **dadurch gekennzeichnet, dass** die Halteplatten (22, 23, 24) manuell über kombinierbare Drehknöpfe (26, 27, 28) und/oder elektromechanisch ansteuerbar sind.

23. Vorrichtung nach einem der vorhergehenden Ansprüche, **dadurch gekennzeichnet, dass** das Ein-, resp. Ausschwenken der einzelnen Halteplatten (22, 23, 24) elektronisch, beispielsweise mittels eines Rechners ansteuerbar ist.

24. Vorrichtung nach einem der vorhergehenden Ansprüche, **dadurch gekennzeichnet, dass** die Lichtquellen (1a, 1b) und/oder die Spektralfilter (5a, 5b, 5c) und/oder der Lichtleiter (10) verschiebbar (Schwenkradius unendlich) anordenbar sind.
